# EUROPEAN PATENT APPLICATION

(11) **EP 4 764 312 A1**
(43) Date of publication of application: **24.06.2026**
(21) Application number: 25216881.0
(22) Date of filing: 19.11.2025
(51) Int. Cl.: F23R 3/20, F02K 3/10, F02K 3/11, F23R 3/14

(54) **FLAMEHOLDER FOR A REHEAT ASSEMBLY**

(30) Priority: 19.12.2024 GB 202418691
(71) Applicant: Rolls-Royce plc, London N1 9FX (GB)
(72) Inventor: Powell, Ashley J, DE24 8BJ Derby (GB); Romero, Romero, DE24 8BJ Derby (GB); Wilkinson, Andrew, DE24 8BJ Derby (GB)
(74) Representative: Rolls-Royce plc

(57) **Abstract**

There is provided a flameholder (370) for a reheat assembly (300) of a gas turbine engine (10). The flameholder comprises a fuel atomizer (379A, 379B), an air passageway (375A, 375B) and a fuel passageway (374, 374A, 374B). The air passageway (375A, 375B) is configured to convey a flow of air (521A, 521B) to the fuel atomizer (379A, 379B). The fuel passageway (374, 374A, 374B) is configured to convey a flow of fuel (531A) to the fuel atomizer (379A, 379B). The fuel atomizer (379A, 379B) includes a mixing chamber (430) and a swirler (420).

## Description

### FIELD

This disclosure relates to a flameholder for a reheat assembly of a gas turbine engine. This disclosure further relates to: a reheat assembly comprising such a flameholder, a gas turbine engine comprising such a reheat assembly, and an aircraft comprising such a gas turbine engine.

### BACKGROUND

A reheat assembly may be provided to a gas turbine engine for the purpose of providing increased thrust. A reheat assembly increases thrust by injecting fuel into a flow of gas which has been exhausted from a core of the gas turbine engine and subsequently combusting this injected fuel in a flame. The heat released by the flame reheats the flow of gas from the core of the gas turbine engine and thus provides additional thrust.

### SUMMARY

According to a first aspect there is provided a flameholder for a reheat assembly of a gas turbine engine, the flameholder comprising: a fuel atomizer; an air passageway configured to convey a flow of air to the fuel atomizer; and a fuel passageway configured to convey a flow of fuel to the fuel atomizer, the fuel atomizer includes a mixing chamber configured to mix a portion of the flow of air from the air passageway with the flow of fuel from the fuel passageway to produce a fuel-air mixture and wherein the fuel atomizer includes a swirler; and
the mixing chamber is configured to receive the portion of the flow of air from the air passageway via the swirler.

In an embodiment, the fuel atomizer is internal to the flameholder. In an embodiment, the flameholder is configured to promote a formation of a wake-stabilised region within an airflow downstream of the flameholder.

In an embodiment, the air passageway and the fuel passageway are located within an external structure of the flameholder.

In an embodiment, the fuel atomizer is integral with the external structure of the flameholder. In an embodiment, the fuel passageway is integral with the external structure of the flameholder. In an embodiment, the air passageway is integral with the external structure of the flameholder.

In an embodiment, the mixing chamber is configured to discharge the fuel-air mixture from the flameholder.

In an embodiment, the air passageway and the fuel passageway are embedded within the flameholder.

In an embodiment, the swirler is disposed (e.g., extends) around the fuel passageway. In an embodiment, the swirler is configured to increase a component of a velocity of the portion of the flow of air in an annular direction (e.g., with respect to a centreline of the fuel passageway).

In an embodiment, the fuel atomizer includes a fuel discharge port. In an embodiment, the fuel discharge port is configured to discharge at least a portion of the flow of fuel into the mixing chamber.

In an embodiment, the fuel atomizer includes a plurality of fuel discharge ports. In an embodiment, each fuel discharge port is configured to discharge a respective portion of the flow of fuel into the mixing chamber.

In an embodiment, each fuel discharge port opposes an internal surface of the mixing chamber and is configured to discharge the portion of the flow of fuel onto the opposing internal surface.

In an embodiment, the fuel atomizer includes a further swirler configured to receive a further portion of the flow of air from the air passageway and to discharge the further portion of the flow of air for mixing with the fuel-air mixture produced by the mixing chamber.

**In** an embodiment, the further swirler is disposed (e.g., extends) around the mixing chamber.

**In** an embodiment, the further swirler comprises one or more further vanes configured to increase a component of a velocity of the further portion of the flow of air in a further annular direction (e.g., with respect to a centreline of the fuel passageway). In an embodiment, the further annular direction opposes the annular direction.

**In** an embodiment:
the flameholder is elongate along a primary direction;
the flameholder defines an arm extending along a secondary direction transverse to the primary direction; and
the fuel atomizer is located within the arm.

**In** an embodiment:
the fuel atomizer is one of a plurality of fuel atomizers, the air passageway is one of a plurality of air passageways, the fuel passageway is one of a plurality of fuel passageways;
the flameholder comprises the plurality of fuel atomizers, the plurality of air passageways and the plurality of fuel passageways;
each air passageway is configured to convey a flow of air to a respective fuel atomizer; and
each fuel passageway is configured to convey a flow of fuel to a respective fuel atomizer.

In an embodiment:
the flameholder is elongate along a primary direction;
the flameholder defines a plurality of arms extending in opposing transverse directions from the primary direction; and
each fuel atomizer is located within a respective arm.

In an embodiment, the secondary direction is perpendicular to the primary direction. In an embodiment, the flameholder is configured to promote a formation of a wake-stabilised region within a airflow downstream of the flameholder, with the wake-stabilised region having a maximum dimension along the primary direction. In an embodiment, the flameholder has a maximum external dimension along the primary direction.

In an embodiment, the flameholder is configured to be mounted within the gas turbine engine such that the primary direction extends along a radial direction of the gas turbine engine and the secondary direction is aligned with a tangential direction of the gas turbine engine.

In an embodiment, the flameholder is in the form of a unibody.

In an embodiment, the flameholder is a product of additive layer manufacturing.

According to a second aspect there is provided a cruciform-shaped flameholder for a reheat assembly of a gas turbine engine.

According to a third aspect there is provided a reheat assembly for a gas turbine engine, the reheat assembly comprising:
a flameholder in accordance with the first aspect or the second aspect;
a jetpipe casing comprising:
   a reheat core section configured to convey a core airflow from a reheat core inlet to a reheat core outlet; and
   a reheat bypass section configured to convey a bypass airflow from a reheat bypass inlet to a reheat bypass outlet radially outward of the core section, the reheat core section and the reheat bypass section being radially separated at the reheat core inlet and the reheat bypass inlet by a support duct;
   wherein the flameholder is mounted to the jetpipe casing and/or the support duct.

In an embodiment, the flameholder is a radially-extending flameholder within the reheat assembly (e.g., and the gas turbine engine).

In an embodiment, the fuel atomizer is configured to discharge the fuel-air mixture into the reheat core section and/or the reheat bypass section. In an embodiment, the flameholder comprises an inlet aperture configured to receive air from the reheat bypass section and the air passageway is in fluid communication with the inlet aperture.

According to a fourth aspect there is provided a gas turbine engine comprising:
a reheat assembly in accordance with the third aspect;
an engine core defining a core flow pathway; and
an outer casing which defines a bypass duct around the engine core; wherein:
   the jetpipe casing is attached to the outer casing and the support duct is radially aligned an outlet of the engine core so that:
   the reheat core inlet is aligned with an outlet of the core duct, and
   the reheat bypass inlet is aligned with an outlet of the bypass duct;
   the core flow pathway is configured to convey the core airflow through the engine core to the reheat core inlet; and
   the bypass duct is configured to convey the bypass airflow to the reheat bypass inlet.

According to a fifth aspect there is provided aircraft comprising a gas turbine engine in accordance with the fourth aspect.

### BRIEF DESCRIPTION OF THE DRAWINGS

Embodiments will now be described by way of example only with reference to the accompanying drawings, in which:
FIG. 1 is a top view of an aircraft comprising an airframe and a gas turbine engine;
FIG. 2 is a sectional side view of a gas turbine engine comprising a reheat assembly;
FIG. 3 is a sectional side view of an example reheat assembly comprising a flameholder;
FIG. 4 is a sectional front view of the example reheat assembly of FIG. 3;
FIG. 5 is a rear view of an example flameholder;
FIG. 6 is a front view of the example flameholder of FIG. 5;
FIG. 7 is a cut-through perspective view of the example flameholder of FIG. 5; and
FIG. 8 is a sectional side view of the example flameholder of FIG. 5.

### DETAILED DESCRIPTION

### Aircraft

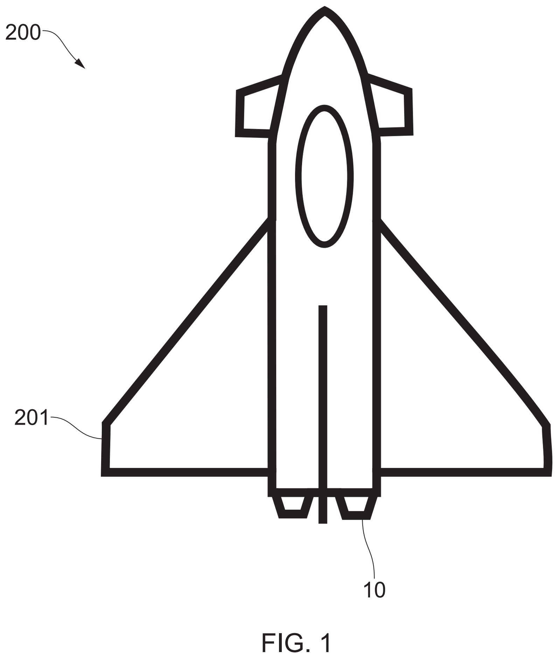

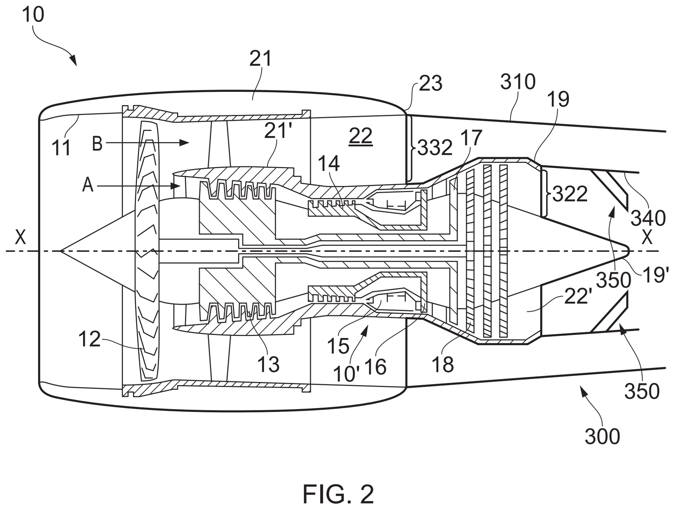

FIG. 1 shows a simplified and schematic view of an aircraft 200 comprising an airframe 201 and a gas turbine engine 10. The gas turbine engine 10 may be in accordance with the gas turbine engine 10 described below with reference to FIG. 2.

### Gas turbine engine

FIG. 2 shows a ducted fan gas turbine engine 10 having a principal and rotational axis X-X. The engine 10 generally comprises an air intake 11, a propulsive fan 12, and an engine core 10'. The engine core 10' comprises, in axial flow series, an intermediate pressure compressor 13, a high-pressure compressor 14, combustion equipment 15, a high-pressure turbine 16, an intermediate pressure turbine 17, and a low-pressure turbine 18. An outer casing 21 generally surrounds the engine 10 and defines the intake 11, a bypass duct 22 and a bypass duct outlet 23. An inner casing 21' defines a core duct 22', in which the engine core 10' is disposed, and further defines a core duct outlet 19 in which an exhaust cone 19' is disposed.

During operation, air entering the intake 11 is accelerated by the fan 12 to produce two air flows: a core airflow A into the engine core 10' and a bypass airflow B which passes through the bypass duct 22 to provide propulsive thrust. The intermediate pressure compressor 13 compresses the core airflow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the core duct outlet 19 to provide additional propulsive thrust. The resultant hot combustion products are exhausted through the core duct outlet 19. The high, intermediate and low-pressure turbines respectively drive the high and intermediate pressure compressors 14, 13 and the fan 12 by suitable interconnecting shafts.

### Reheat assemblies

The gas turbine engine 10 further comprises a reheat assembly 300. The reheat assembly 300 is generally configured to inject fuel into the core airflow A downstream of the low-pressure turbine 18 and optionally to inject fuel into the bypass airflow B for the purpose of combustion therein, causing the core airflow A or the bypass airflow B to be reheated, thereby providing additional propulsive thrust.

The reheat assembly 300 generally comprises a jetpipe casing 310 and a support duct 340. The support duct 340 extends axially from an upstream end of the jetpipe casing 310 (i.e., an end closest to the air intake 11), at least partially through the jetpipe casing 310 in a direction towards a downstream end of the jetpipe casing 310 (i.e., an end furthest from the air intake 11). The jetpipe casing 310 comprises a reheat core section 320 configured to duct the core airflow A from a reheat core inlet 322 to a reheat core outlet 324, and a reheat bypass section 330 configured to duct the bypass airflow B from a reheat bypass inlet 332 to a reheat bypass outlet 334. The reheat bypass section 330 is annular and disposed radially outwardly from the reheat core section 320 such that the reheat bypass inlet 332 is disposed radially outward of the reheat core inlet 322, while the reheat bypass outlet 334 is also disposed radially outward of the reheat core outlet 324. The support duct 340 generally radially separates the reheat core section 320 and the reheat bypass section 330. The support duct 340 at least partially separates the reheat bypass section 330 from the reheat core section 320 at the upstream end of the jetpipe casing 310.

The jetpipe casing 310 defines an afterburning region in the downstream end of the jetpipe casing 310 in which a core airflow A and a bypass airflow B from the reheat core section 320 and the reheat bypass section 330 respectively are able to mix, and in which fuel discharged into the air streams may be ignited to provide additional thrust.

The jetpipe casing 310 of the reheat assembly 300 is radially aligned with, and attached to the outer casing 21 such that the reheat bypass inlet 332 of the reheat assembly 300 is aligned with the bypass duct outlet 23. The support duct 340 of the reheat assembly 300 is radially aligned with, and attached to the inner casing 21' such that the reheat core inlet 322 of the reheat assembly 300 is aligned with the core duct outlet 19.

Accordingly, the core duct 22' of the gas turbine engine 10 is configured to convey the core airflow A through the engine core 10' to the reheat core inlet 322 and the bypass duct 22 of the gas turbine engine 10 is configured to convey the bypass airflow B through the gas turbine engine 10 to the reheat bypass inlet 332, without passing through the engine core 10'.

The reheat assembly 300 comprises a plurality of reheat arrangements 350. Each reheat arrangement 350 is configured to enable the ignition of, and promote the stable formation of, a flame within the reheat assembly 300. Each reheat arrangement 350 may be structurally similar (e.g.,. identical).

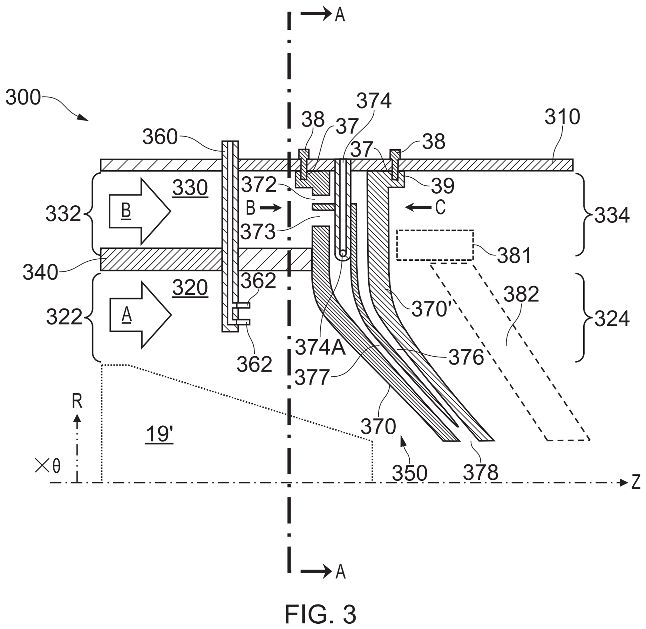

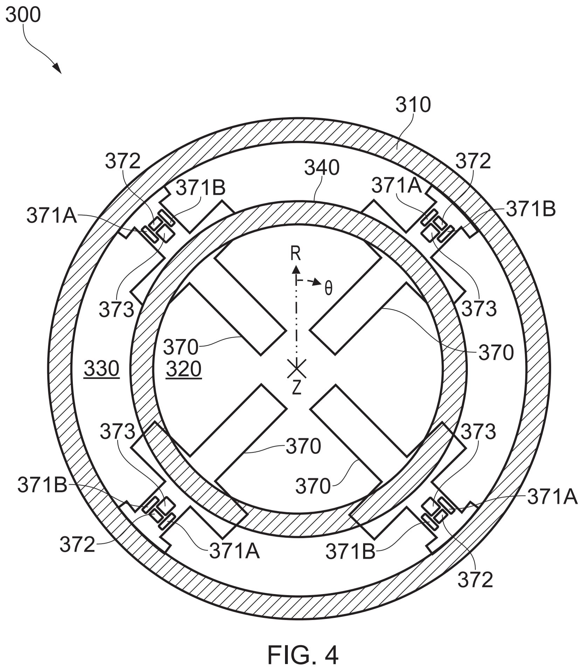

The following description is provided with particular reference to FIGs. 3 to 9. FIG. 3 shows a sectional side view of a first example reheat assembly 300 suitable for use as the reheat assembly 300 in the gas turbine engine 10 of FIG. 2 as described above, with like reference signs indicating common or similar features. FIG. 4 shows a sectional front view of the first example reheat assembly 300 as seen through section A-A as indicated on FIG. 3.

The reheat assembly 300 has an axial direction Z, a radial direction R and an angular direction θ. Because FIG. 3 is a sectional side view of the reheat assembly 300, the angular direction θ is defined through the plane of the page, whereas the axial direction Z and the radial direction R are defined according to the direction of the corresponding coordinate arrows provided by FIG. 3. The reheat assembly 300 is configured such that, when the reheat assembly 300 is incorporated into a gas turbine engine, the axial direction Z of the reheat assembly 300 aligns with a principal and rotational axis of the gas turbine engine. The jetpipe casing 310 defines the axial direction Z, the radial direction R and the angular direction θ of the reheat assembly 300.

Each reheat arrangement 350 comprises a radially extending spray bar 360 and a radially extending flameholder 370. The spray bar 360 and the flameholder 370 are each radially extending in that they extend (e.g., principally extend) along a direction having a component which is parallel to the local radial direction R of the reheat assembly 300. The spray bar 360 and the flameholder 370 are each mounted to the jetpipe casing 310, with at least the flameholder being 370 being removably mounted to the jetpipe casing 310. Specifically, each reheat arrangement comprises a plurality of fasteners 38 (e.g., bolts), each of which extends through the jetpipe casing 310 and into a complementary hole 37 (e.g., a threaded hole 37) located within a flange portion 39 of the flameholder 370 so as to mount the flameholder 370 to the jetpipe casing 310. The spray bar 360 may be mounted to the jetpipe casing 310 by a flange and one or more bolts (e.g., a bolting flange) The spray bar 360 may be otherwise mounted to the jetpipe casing 310 (e.g., by one or more welds).

As shown by FIG. 4, the plurality of reheat arrangements 350 (e.g., the plurality of spray bars 360 and the plurality of flameholders 370) are angularly distributed around the jetpipe casing 310 and are structurally identical. In other words, the plurality of reheat arrangements 350 are offset with respect to one another around the angular direction θ of the reheat assembly 300. Although FIG.4 shows a total of four reheat arrangements 350 offset with respect to one another around the angular direction θ of the reheat assembly 300, it will be appreciated that there may be any suitable number of reheat arrangements, which may be offset with respect to one another around the angular direction θ of the reheat assembly 300 in this way. In this example, and as shown by FIG. 4, the reheat assembly 300 has a substantially circular cross-section in the plane defined by the radial direction R and the angular direction θ. However, in other examples, the reheat assembly 300 may have an alternatively shaped cross-section in the plane defined by the radial direction R and the angular direction θ (e.g., an elliptical cross-section). It will be appreciated that only one of the plurality of reheat arrangements 350 shown by FIG. 4 is visible in FIG. 3.

The radially extending flameholder 370 of each reheat arrangement 350 is configured to instigate and to maintain a relatively low-speed eddy within the core airflow A to form a wake-stabilised region 382 located downstream of the flameholder 370.

The radially extending spray bar 360 of each reheat arrangement 350 includes a set of fuel injection ports 362, such that the set of fuel injection ports 362 are disposed within the spray bar 360. Each fuel injection port 362 is configured to discharge fuel into the reheat core section 320 and thus into the core airflow A. Each fuel injection port 362 is located upstream of the wake-stabilised region 382. In this example, the set of fuel injection ports 362 of the spray bar 360 are located in the same angular plane defined by the axial direction Z and the radial direction R as the flameholder 370, such that the set of fuel injection ports 362 are substantially angularly aligned with the flameholder 370 upstream of the flow wake-stabilised region 382. In some examples, there may be only a single fuel injection port 362 in each spray bar 360.

The spray bar 360 of each reheat arrangement 350 is separate from the flameholder 370 of the same reheat arrangement 350 and is located upstream of the flameholder 370 such that the flameholder 370 is located downstream of the set of fuel injection ports 362. In other words, in each reheat arrangement 350, the flameholder 370 is offset from the spray bar 360 and thus the set of fuel injection ports 362.

### Flameholders

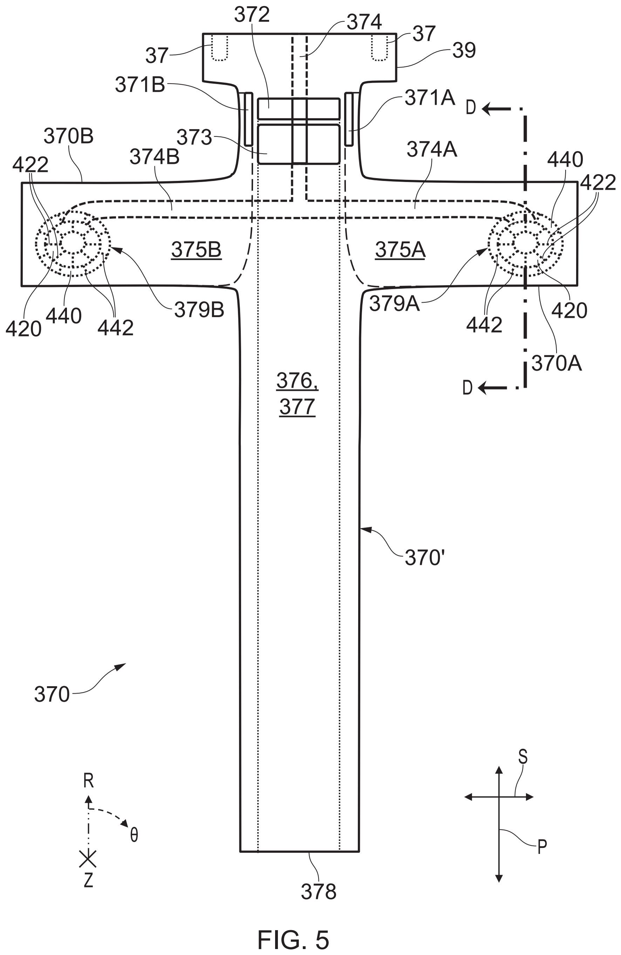

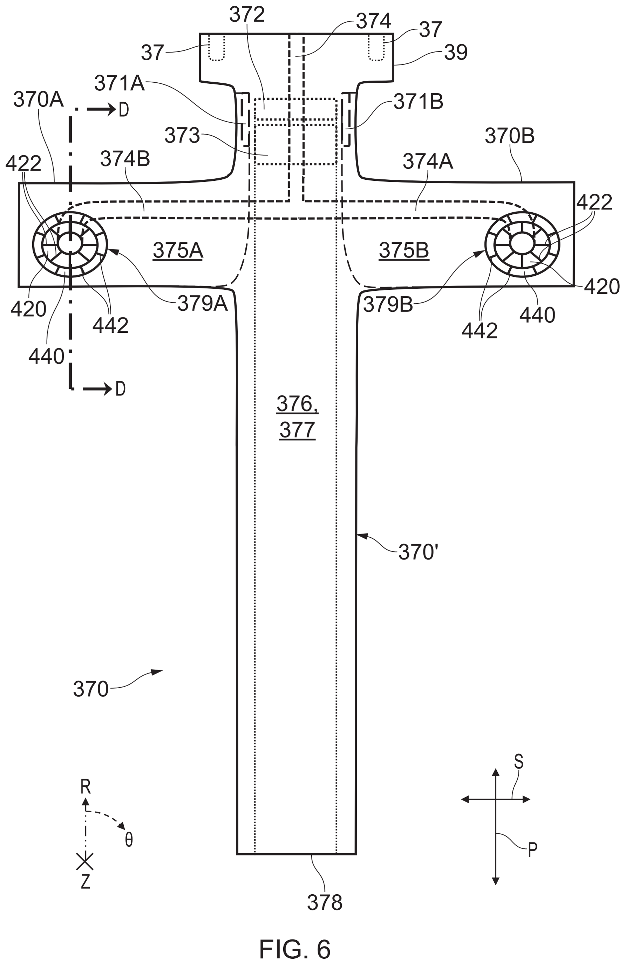

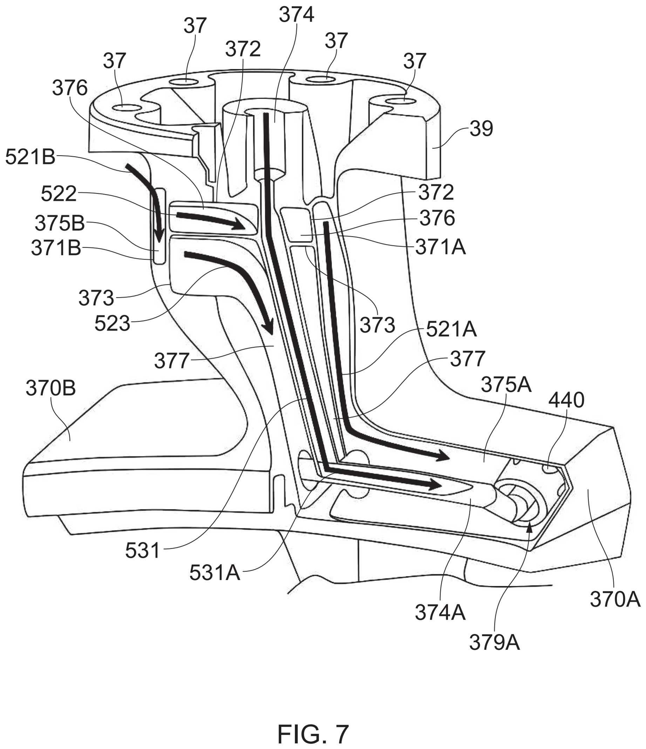

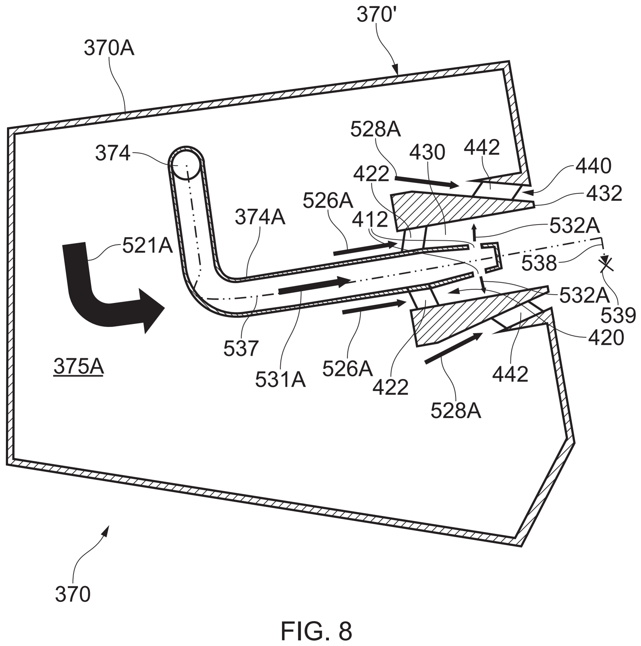

FIG. 5 shows an isolated rear view of an example flameholder 370 suitable for use as the flameholder(s) 370 of the example reheat assembly 300 described above with reference to FIGs. 3 and 4 (e.g., as seen when viewed in the direction indicated by arrow B on FIG. 3). FIG. 6 shows an isolated front view of the example flameholder 370 of FIG. 5 (e.g., as seen when viewed in the direction indicated by arrow C on FIG. 3). FIG. 7 shows a cut-through perspective view of the example flameholder 370 of FIG. 5. FIG. 8 is a side view of the example flameholder of FIG. 5 seen through section D-D as indicated on FIGs. 5 and 6.

The flameholders 370 are each in the form of a unibody produced by an additive layer manufacturing process such as powder bed fusion or selective layer sintering. As best shown by FIGs. 5 and 6, an external structure 370' of each flameholder 370 has a cruciform shape (e.g., each flameholder 370 is cruciform-shaped). That is, each flameholder 370 is elongate in a longitudinal direction P (e.g., a primary direction P) and comprises (e.g., defines) a pair of arms 370A, 370B (e.g., cruciform arms 370A, 370B) extending in opposite directions transverse S to the longitudinal direction P (e.g., in opposite secondary directions S transverse to the primary direction P). When the flameholder 370 is mounted within the reheat assembly 300 (e.g., and within the gas turbine engine 10), the primary direction P extends along (e.g., corresponds to) the radial direction R of the gas turbine engine and the secondary directions S are each aligned with (e.g., are parallel with) a tangential direction of the gas turbine engine 10 (i.e., a direction tangential to the angular direction θ), such that the secondary directions S are perpendicular to the primary direction P (and perpendicular to both the radial direction R and the axial direction Z). The wake-stabilised region 382 which the flameholder 370 is configured to form has a maximum dimension along the primary direction P and the external structure 370' of the flameholder 370 has a maximum dimension along the primary direction P. The cruciform shape of the external structure 370' of the flameholder 370 promotes interaction of the fuel-air mixture discharged by the fuel atomizers 379A, 379B and the airflow which, in use, passes around the cruciform arms (e.g., the bypass airflow B).

Each flameholder 370 comprises (e.g., defines) a pair of fuel atomizers 379A, 379B. Each fuel atomizer is disposed within a respective one of the arms 370A, 370B (e.g., toward/in proximity to an end of the respective one of the arms 370A, 370B) such that each fuel atomizer 379A, 379B is internal to the respective flameholder 370.

Each flameholder 370 comprises (e.g., defines) a plurality of inlet apertures 371A, 371B, 372, 373, each of which is configured to receive a respective flow of air 521A, 521B, 522, 531 from the reheat bypass section 330. The plurality of inlet apertures 371A, 371B, 372, 373 includes a pair of atomizer inlet apertures 371A, 371B, a rear cooling inlet aperture 372 and a central cooling inlet aperture 373. The flameholder 370 further defines an outlet aperture 378 which opens into the reheat core section 320.

The flameholder 370 of each reheat arrangement 350 defines a plurality of internal air passageways 375A, 375B, 376, 377. In turn, the plurality of internal air passageways 375A, 375B, 376, 377 includes a pair of atomizer internal air passageways 375A, 375B, a rear cooling internal air passageway 376 and a central cooling internal air passageway 377.

The rear cooling internal air passageway 376 extends from the rear cooling inlet aperture 372 to the outlet aperture 378. In a similar way, the central cooling internal air passageway 377 extends from the central cooling inlet aperture 373 to the outlet aperture 378.

Each cooling internal air passageway 376, 377 is configured to convey the respective flow of air 522, 523 from the corresponding cooling inlet aperture 372, 373 through the flameholder 370 to the outlet aperture 378 for heat exchange between the flameholder 370 and the respective flow(s) of air therein. Namely, the rear cooling internal air passageway 376 is configured to convey the relevant flow of air 522 from the rear cooling inlet aperture 372 through the flameholder 370 and past a rear wall (e.g., a wall of the flameholder 370 which faces the wake-stabilised region 382) of the flameholder 370 to the outlet aperture 378 to provide cooling to the rear wall. On the other hand, the central cooling internal air passageway 377 is configured to convey the relevant flow of air 523 from the central cooling inlet aperture 373 and through a main body (e.g., including one or more walls of the flameholder 370 which do not face the wake-stabilised region 382) of the flameholder 370 to the outlet aperture 378 to provide cooling to the main body. Once the flows of air 522, 523 conveyed by each cooling internal air passageway 376, 377 reach the outlet aperture 378 they are discharged into the reheat core section 320.

Each atomizer internal air passageway 375A, 375B is configured to convey the respective flow of air 521A, 521B from the corresponding atomizer inlet aperture 371A, 371B through an interior of the flameholder to a respective one of the fuel atomizers 379A, 379B.

Each flameholder 370 further comprises (e.g., further defines) an internal fuel passageway 374. The internal fuel passageway 374 is configured to receive fuel 531 from outside the jetpipe casing 310, such as from a fuel reservoir or a fuel supply system (not shown). The internal fuel passageway 374 splits into a pair of internal fuel passageway branches 374A, 374B. In equally correct terms, the internal fuel passageway 374 may be described as an upstream internal fuel passageway 374 and the internal fuel passageway branches 374A, 374B may be described as downstream internal fuel passageways 374A, 374B which are fluidically connected to, and diverge from, the upstream internal fuel passageway 374. Each branch 374A, 374B extends along a respective arm 370A, 370B (e.g., in opposite secondary directions transverse to the primary direction) to the fuel atomizer 370A, 370B which is disposed within the respective arm 370A, 370B. As a result, each internal fuel passageway branch 374A, 374B is configured to convey fuel (e.g., a portion 531A of the fuel 531, which may be more simply referred to as a flow of fuel 531A) to a respective one of the fuel atomizers 379A, 379B.

In this way, each fuel atomizer 379A, 379B is fed with both fuel and air which has passed (e.g., been conveyed) through an interior of the flameholder 370 during use.

The internal air passageways 375A, 375B, 376, 377 and the internal fuel passageway(s) 374, 374A, 374B are each located within the external structure 370' of the flameholder 370. Moreover, the fuel atomizers 379A, 379B, the internal air passageways 375A, 375B, 376, 377 and the internal fuel passageway(s) 374, 374A, 374B are each integral with the external structure 370' of (e.g., are each embedded in) the flameholder 370 as formed by the additive layer manufacturing processes.

Each fuel atomizer 379A, 379B is configured to mix a portion of the flow of air 521A, 521B from the atomizer internal air passageway 375A, 375B with the flow of fuel 531A from the internal fuel passageway branch 374A, 374B to produce a fuel-air mixture and to subsequently discharge the fuel-air mixture from the flameholder 370 (e.g., into the reheat core section 320 and/or the reheat bypass section 330) into a primary zone 381 adjacent to the wake-stabilised region 382. The fuel atomizers 379A, 379B function to create a relatively homogenous fuel-air mixture (e.g., a fuel-air mixture in which the fuel has been substantially atomized/vaporized therein) having a predetermined air-fuel ratio (AFR) and to discharge this fuel-air mixture into the primary zone 381. This fuel-air mixture may then ignite (e.g., be ignited by a pilot) in the primary zone 381 and thus cause a flame to form throughout the wake-stabilised region 382 as the fuel discharged by the spray bar 360 upstream of the flameholder 370 combusts with the core airflow A. The primary zone 381 may be at least partially located within (e.g., aligned with) the reheat core section 320 and/or the reheat bypass section 330.

As best shown by FIG. 8 each fuel atomizer 379A, 379B comprises a plurality of fuel discharge ports 412, an inner swirler 420, a mixing chamber 430, and an outer swirler 440.

The inner swirler 420 is directly fluidically coupled to the respective atomizer internal air passageway 375A, 375B and to the mixing chamber 430. As a result, in use, the mixing chamber 430 receives a principal portion 526A of the flow of air 521A, 521B conveyed by the atomizer internal air passageway 375A, 375B via the inner swirler 420. The outer swirler 440 is also directly fluidically coupled to the respective atomizer internal air passageway 375A, 375B such that, in use, the outer swirler 440 receives a remaining portion 528A of the flow of air 521A, 521B conveyed by the atomizer internal air passageway 375A, 375B.

Each fuel discharge port 412 is configured to discharge a respective portion 532A of the flow of fuel 531A conveyed by the respective internal fuel passageway branch 374A, 374B into the mixing chamber 430. As best shown by FIG. 8, each fuel discharge port 412 opposes an internal surface 432 of the mixing chamber 430 and is configured to discharge the portion 532A of the flow of fuel 531A conveyed by the respective internal fuel passageway branch 374A, 374B onto the opposing internal surface 432. Accordingly, the direction of the portion 532A of the flow of fuel 531A which is discharged into the mixing chamber 430 is generally perpendicular to the direction (e.g., the bulk direction) of the principal portion 526A of the flow of air 521A, 521B within the mixing chamber 430. This arrangement and configuration of the fuel atomizers 379A, 379B may be referred to as a pre-filmer type atomizer 379A, 379B or cross-flow type atomizer 379A, 379B. The AFR of the fuel-air mixture created by the atomizer 379A, 379B is determined, among other things, by the size of the fuel discharge ports 412. The size of the fuel discharge ports 412 may be selected so as to control the AFR of the fuel-air mixture created by the atomizer 379A, 379B and/or as well as influence the atomization of the fuel within the mixing chamber 430.

In use, the principal portion 526A of the flow of air 521A, 521B received from the atomizer internal air passageway 375A, 375B via the inner swirler 420 is mixed with the fuel received from the respective internal fuel passageway branch 374A, 374B via the fuel discharge ports 412 within the mixing chamber 430 such that the fuel is atomized within the air and thereby producing the fuel-air mixture. The mixing chamber 430 is open to an exterior of the flameholder 370, such that the fuel-air mixture is discharged from the flameholder 370 by the mixing chamber 430 toward the primary zone 381.

The inner swirler 420 extends completely around the respective internal fuel passageway branch 374A, 374B. The inner swirler 420 comprises a plurality of inner vanes 422 configured to increase a component of a velocity of the principal portion 526A of the flow of air 521A, 521B in an annular direction 539 of the internal fuel passageway branch 374A, 374B (e.g., an inner swirl direction), with the annular direction 539 extending around a centreline 537 of the internal fuel passageway branch 374A, 374B and being perpendicular to a radial direction 538 of the internal fuel passageway branch 374A, 374B. To this end, a profile of each inner vane 422 may be substantially helical. Consequently, when the principal portion 526A of the flow of air 521A, 521B enters the mixing chamber 430 after passing through the inner swirler 420, the velocity of the principal portion 526A of the flow of air 521A, 521B has a substantial component in the annular direction 539.

The outer swirler 440 is configured to discharge the remaining portion 528A of the flow of air 521A, 521B for mixing with the fuel-air mixture produced by the mixing chamber 430 prior to reaching the primary zone 381. The inner swirler 440 extends completely around the mixing chamber 430. The outer swirler 440 comprises a plurality of outer vanes 442 configured to increase a component of a velocity of the remaining portion 528A of the flow of air 521A, 521B in a direction (e.g., an outer swirl direction) which is parallel to the annular direction 539 of the internal fuel passageway branch 374A, 374B. In the example of FIGs. 5 to 8, the inner swirl direction and the outer swirl direction oppose one another, such that the inner swirler 420 and the outer swirler 440 are configured to accelerate the respective portions 526A, 528A of the flow of air 521A, 521B in opposite directions. As a result, the fuel-air mixture discharged by the mixing chamber 430 is subject to fluid shearing (and thus more mixing) with the remaining portion 528A of the flow of air 521A, 521B discharged by the outer swirler 440. This may result in a more homogenous fuel-air mixture subsequently arriving in the primary zone 381. In other examples, the inner swirl direction and the outer swirl direction may not oppose one another.

Inclusion (e.g., integration) of the fuel atomizer(s) 379A, 379B (and in particular, the mixing chamber(s) 430 within the flameholder enables the fuel atomizer(s) 379A, 379B/mixing chambers 430 to be effectively cooled by the flows of air conveyed through the flameholder by the internal air passageways 375A, 375B, 376, 377. In a previously considered reheat assembly, vaporiser shells were employed for the purpose of atomising fuel prior to being provided to a primary zone. However, these vaporiser shells were thermally exposed to the core airflow A and proved challenging to cool, whereas cooling is desirable to mitigate risks of cracking, burning off of material and/or loss of material. The mixing chamber(s) 430 of reheat assemblies 300 in accordance with the present disclosure are associated with a lower risk of cracking, burning off of material and/or loss of material.

In addition, inclusion (e.g., integration) of the fuel atomizers 379A, 379B within the flameholder 370 reduces a mass and/or a part count of the reheat assembly 300 in which it is incorporated. By way of example, reheat assemblies 300 in accordance with the present disclosure may not comprise vaporiser shells/shrouds and associated mounting features.

The internal fuel passageway 374 being located within (e.g., internal to) the external structure 371' of the flameholder 370 enables fuel delivery to the fuel atomisers 379A, 379B to be substantially located within the external structure 370' of the flameholder 370. In turns, this allows for a wider fuel manifold to be disposed outside of the jetpipe casing 310, thus reducing the amount of components which are located within or extend through the reheat bypass section 330 and thereby relatively reducing pressures losses within the reheat bypass section 330 caused by physical obstructions therein.

Although each fuel atomizer 379A, 379B of the example flameholder 370 described above with reference to FIGs. 5 to 9 comprises a plurality of fuel discharge ports 412, this need not necessarily be the case. In other examples, each fuel atomizer 379A, 379B may only comprise a single fuel discharge port 412. Additionally or alternatively, it may be that the or each fuel discharge port 412 is not configured to discharge fuel onto an opposing internal surface 432 of the mixing chamber 430. This arrangement and configuration of the fuel atomizers 379A, 379B may be referred to as a pressure blast type atomizer 379A, 379B.

Further, although it has been described that each of the plurality of inlet apertures 371A, 371B, 372, 373 is configured to receive a respective flow of air from the reheat bypass section 330, this need not necessarily be the case. As an example, it may be that each of the atomizer inlet apertures 371A, 371B is configured to receive a respective flow of air from the reheat core section 320. As another example, it may be that that each of the atomizer inlet apertures 371A, 371B is configured to receive a respective flow of air from both the reheat core section 320 and the reheat bypass section 330.

### Other

Various examples have been described, each of which comprise one or more combinations of features. It will be appreciated by those skilled in the art that, except where clearly mutually exclusive, any of the features may be employed separately or in combination with any other features and the disclosure extends to and includes all combinations and sub-combinations of one or more features described herein. The present disclosure is also relevant for land, aviation and marine applications in both civil and military contexts.

## Claims

1. A flameholder for a reheat assembly of a gas turbine engine, the flameholder comprising: a fuel atomizer; an air passageway configured to convey a flow of air to the fuel atomizer; and a fuel passageway configured to convey a flow of fuel to the fuel atomizer, the fuel atomizer includes a mixing chamber configured to mix a portion of the flow of air from the air passageway with the flow of fuel from the fuel passageway to produce a fuel-air mixture and wherein the fuel atomizer further includes a swirler; and wherin the mixing chamber is configured to receive the portion of the flow of air from the air passageway via the swirler.

2. The flameholder of claim 1, wherein the air passageway and the fuel passageway are located within an external structure of the flameholder.

3. The flameholder of claim 2, wherein the fuel atomizer is integral with the external structure of the flameholder.

4. The flameholder of claim 2 or claim 3, wherein the fuel passageway is integral with the external structure of the flameholder.

5. The flameholder of any of claims 2 to 4, wherein the air passageway is integral with the external structure of the flameholder.

6. The flameholder of any preceding claim, wherein:
the fuel atomizer includes a fuel discharge port;
the fuel discharge port is configured to discharge at least a portion of the flow of fuel into the mixing chamber.

7. The flameholder of any one of claims 1-5, wherein:
the fuel atomizer includes a plurality of fuel discharge ports; and
each fuel discharge port is configured to discharge a respective portion of the flow of fuel into the mixing chamber.

8. The flameholder of any preceding claim, wherein the fuel atomizer includes a further swirler configured to receive a further portion of the flow of air from the air passageway and to discharge the further portion of the flow of air for mixing with the fuel-air mixture produced by the mixing chamber.

9. The flameholder of any preceding claim, wherein:
the flameholder is elongate along a primary direction;
the flameholder defines an arm extending along a secondary direction transverse to the primary direction; and
the fuel atomizer is located within the arm.

10. The flameholder of claim 9, wherein the flameholder is configured to be mounted within the gas turbine engine such that the primary direction extends along a radial direction of the gas turbine engine and the secondary direction is aligned with a
tangential direction of the gas turbine engine.

11. The flameholder of any claims 1 to 8, wherein:
the fuel atomizer is one of a plurality of fuel atomizers, the air passageway is one of a plurality of air passageways, the fuel passageway is one of a plurality of fuel passageways;
the flameholder comprises the plurality of fuel atomizers, the plurality of air passageways and the plurality of
fuel passageways;
each air passageway is configured to convey a flow of air to a respective fuel atomizer; and
each fuel passageway is configured to convey a flow of fuel to a respective fuel atomizer.

12. The flameholder of claim 11, wherein:
the flameholder is elongate along a primary direction;
the flameholder defines a plurality of arms extending in opposing transverse directions from the primary direction; and
each fuel atomizer is located within a respective arm.

13. The flameholder of claim 12, wherein the flameholder is configured to be mounted within the gas turbine engine such that the primary direction extends along a radial direction of the gas turbine engine and the secondary direction is aligned with a tangential direction of the gas turbine engine.

14. The flameholder of any preceding claim, wherein the flameholder is in the form of a unibody.

15. A reheat assembly for a gas turbine engine, the reheat assembly comprising:
the flameholder of any preceding claim;
a jetpipe casing comprising:
a reheat core section configured to convey a core airflow from a reheat core inlet to a reheat core outlet; and
a reheat bypass section configured to convey a bypass airflow from a reheat bypass inlet to a reheat bypass outlet radially outward of the core section, the reheat core section and the reheat bypass section being radially separated at the reheat core inlet and the reheat bypass inlet by a support duct;
wherein the flameholder is mounted to the jetpipe casing and/or the support duct.
